# EUROPEAN PATENT SPECIFICATION

(11) **EP 3 629 395 B1**
(45) Date of publication and mention of the grant of the patent: **25.11.2020**
(21) Application number: 19192893.6
(22) Date of filing: 21.08.2019
(51) Int. Cl.: H01M 2/04, H01M 2/10, H01M 2/30

(54) **TERMINAL PROTECTION COVER AND BATTERY MODULE**
KLEMMENSCHUTZABDECKUNG UND BATTERIEMODUL
COUVERCLE DE PROTECTION DE BORNE ET MODULE DE BATTERIE

(30) Priority: 28.09.2018 CN 201821598774 U
(43) Date of publication of application: 01.04.2020
(73) Proprietor: Contemporary Amperex Technology Co., Limited, Jiaocheng District Ningde City, Fujian 352100 (CN)
(72) Inventor: You, Kaijie, Ningde City, Fujian 352100 (CN); Wang, Derong, Ningde City, Fujian 352100 (CN); Ye, Xiupeng, Ningde City, Fujian 352100 (CN); Ruan, Shengshen, Ningde City, Fujian 352100 (CN)
(74) Representative: Valea AB

(56) References cited:
- WO-A1-2010/059086
- KR-A- 20180 058 552

## Description

### TECHNICAL FIELD

The present disclosure relates to a technical filed of power battery devices, and particularly relates to a terminal protection cover and a battery module.

### BACKGROUND

In the prior art, module output electrodes of battery modules have various configurations. Since connection between the battery modules must be realized through the module output electrodes, the module output electrodes are provided with open connection ports. However, during transportation of the battery modules, and before the battery modules are connected to each other, the open connection port may cause an accident such as short circuit of the modules and electric shock of an operator.

Therefore, there is a dire need for a new terminal protection cover and battery module.

WO 2010/059086 A1 discloses a device for facilitating connection of one or more elements, e.g. cables, to a battery pole. The device includes an adapter. A first portion of the adapter is configured such that it can be attached to the battery pole. A second portion of the adapter includes a protruding member, which is configured such that it can receive the one or more elements. The adapter is further configured such that there is an electrical connection between the protruding member and the first portion of the adapter. The device further includes a protective lid, which is configured to provide an electrically insulating cover around at least the protruding member.

### SUMMARY

The embodiments of the present disclosure provide a terminal protection cover and a battery module, which can prevent short circuit of the modules and electric shock of an operator during transportation of the battery modules.

One aspect of the embodiments of the present disclosure provides a terminal protection cover for a battery module, comprising a base portion, comprising a peripheral region and provided with base openings at the peripheral region; and a side wall, connected to the peripheral region and extending in a first direction, wherein the side wall is provided with two or more groups of side openings spaced apart from each other and extending in the first direction, and at least one base opening is located between adjacent two groups of side openings such that a portion of the side wall can be removed by means of the at least one base opening and the adjacent two groups of side openings.

According to one aspect of the present disclosure, the base opening is formed to extend through part of or the entire base portion in a thickness direction of the base portion.

According to one aspect of the present disclosure, between adjacent two groups of side openings, there is disposed one base opening, or there are disposed two or more base openings spaced apart from each other.

According to one aspect of the present disclosure, each group of side openings comprises one or more side wall slots recessed into the side wall in a thickness direction of the side wall, and in the case that each group of the side openings comprises two or more side wall slots, the two or more side wall slots are spaced apart in the first direction.

According to one aspect of the present disclosure, the side wall slot is formed to extend through part of or the entire side wall in the thickness direction of the side wall.

According to one aspect of the present disclosure, the side wall is formed into a circular cylinder or an elliptical cylinder.

According to one aspect of the present disclosure, the terminal protection cover comprises two or more base openings, and the two or more base openings are respectively located between adjacent two groups of side openings.

According to one aspect of the present disclosure, the side wall comprises three or more sub-side plates, each of which comprises two side connecting edges opposite to each other and extending in the first direction, wherein the three or more sub-side plates are connected to each other through the side connecting edges to form a prism, and the side openings are disposed adjacent to the side connecting edges.

According to one aspect of the present disclosure, the terminal protection cover comprises three or more groups of side openings, and the three or more groups of side openings are respectively disposed adjacent to the side connecting edges of the three or more sub-side plates; and the terminal protection cover comprises three or more base openings, and the three or more base openings are respectively located between adjacent two groups of side openings.

A further aspect of the present disclosure provides a battery module, comprising: a plurality of unit cells stacked in a second direction; an end plate, disposed on one side of the plurality of unit cells in the second direction and provided with a limiting slot at an end in the first direction; an upper cover, disposed on one side of the plurality of unit cells in the first direction, wherein the upper cover is provided with a groove disposed corresponding to the limiting slot; an output component, comprising a limiting portion and an output terminal continuously connected to each other, wherein the limiting portion is located in the limiting slot and the output terminal is located in the groove; and a terminal protection cover as described above, for covering the output terminal and located in the groove.

According to one aspect of the present disclosure, the side wall of the terminal protection cover is provided with a snap component such that the terminal protection cover can be secured to the output terminal and/or the upper cover by the snap component in a snap fit manner.

According to one aspect of the present disclosure, the groove comprises a first inner wall, a second inner wall, a third inner wall and a bottom wall, wherein the first inner wall and the second inner wall are disposed opposite to each other and are connected by the bottom wall, and the bottom wall is provided with a mating snap member; and the snap component comprises a first snap member disposed toward the third inner wall, and the first snap member is fitted with the mating snap member such that the terminal protection cover can be secured to the upper cover via the first snap member and the mating snap member in the snap fit manner.

According to one aspect of the present disclosure, the snap component comprises two or more second snap members spaced apart in a circumferential surface of the side wall; and the output component is provided with two or more matching snap members on an outer surface, and the two or more matching snap members are respectively disposed corresponding to the two or more second snap members such that the terminal protection cover is secured to the output terminal via the two or more second snap members and the two or more matching snap members in the snap fit manner.

In the embodiment of the present disclosure, the terminal protection cover of the battery module includes the base portion and the side wall connected to the peripheral region of the base portion, and the base portion and the side wall can cover an outer surface of the output terminal of the battery module. Therefore, during transportation of the battery module, accidents such as short circuit of the modules or electric shock of an operator can be effectively prevented due to the protection of the base portion and the side wall. Further, when connecting the battery modules to each other, live terminal inside the terminal protection cover can be exposed by removing portion of the side wall by means of the base openings and the side openings, thereby facilitating connection between the battery modules. Therefore, by the present disclosure, the accidents such as short circuit of the modules or electric shock of an operator during the transportation of the battery modules can be prevented without affecting the connection between the battery modules.

### BRIEF DESCRIPTION OF THE DRAWINGS

Other features, advantages, and technical effects of the present disclosure will become more apparent by reading the following detailed description on non-limiting embodiments with reference to accompanying drawings, wherein the same or similar reference numerals indicate the same or similar features.
Fig. 1 schematically shows a partial exploded view of a configuration of a battery module according to an embodiment of the present disclosure;
Fig. 2 schematically shows a partial assembly view of a configuration of a battery module according to an embodiment of the present disclosure;
Fig. 3 schematically shows a configuration of a terminal protection cover according to an embodiment of the present disclosure;
Fig. 4 schematically shows a configuration of a terminal protection cover according to an embodiment of the present disclosure from another view;
Fig. 5 shows a use state view of a terminal protection cover according to an embodiment of the present disclosure;
Fig. 6 shows a further use state view of a terminal protection cover according to an embodiment of the present disclosure;
Fig. 7 shows a further use state view of a terminal protection cover according to an embodiment of the present disclosure;

### Description of the reference numerals:

100, unit cell;
200, end plate; 210, limiting slot;
300, upper cover; 310, groove; 320, mating snap member;
400, output component; 410, limiting portion; 420, output terminal; 421, matching snap member;
500, terminal protection cover;
510, base portion; 511, peripheral region; 512, base opening;
520, side wall; 521, side opening; 521a, side wall slot; 522, sub-side plate;
530, snap component; 531, first snap member; 532, second snap member;
600, connecting member;
X, second direction;
Z, first direction.

### DETAILED DESCRIPTION

Features and exemplary embodiments of various aspects of the present disclosure will be described in detail below. In the following detailed description, numerous specific details are set forth to provide a full understanding of the present disclosure. However, it shall be apparent to the person skilled in the art that the present disclosure may be implemented without some of the details. The following description of the embodiments is merely made to provide a better understanding of the present disclosure by showing examples of the present disclosure. In the figures and the following description, at least some of well-known structures and techniques are not shown to avoid unnecessarily obscuring the present disclosure. Further, for clarity, size of a portion of the structure may be exaggerated. Furthermore, features, structures, or characteristics described hereinafter may be combined into one or more embodiments in any suitable manner.

Orientations in the following description refer to directions as shown in the figures, and are not intended to define specific structure of the embodiments of the present disclosure. In the description of the present disclosure, it shall be noted that, unless otherwise clearly stated and defined, the terms such as "installation", "connected" shall be understood broadly, may be, for example, a fixed connection, a disassemble connection, or an integral connection, and may be direct connection or indirect connection through an intermediate medium. The specific meaning of the above terms in the present disclosure can be understood by the person skilled in the art according to actual circumstance.

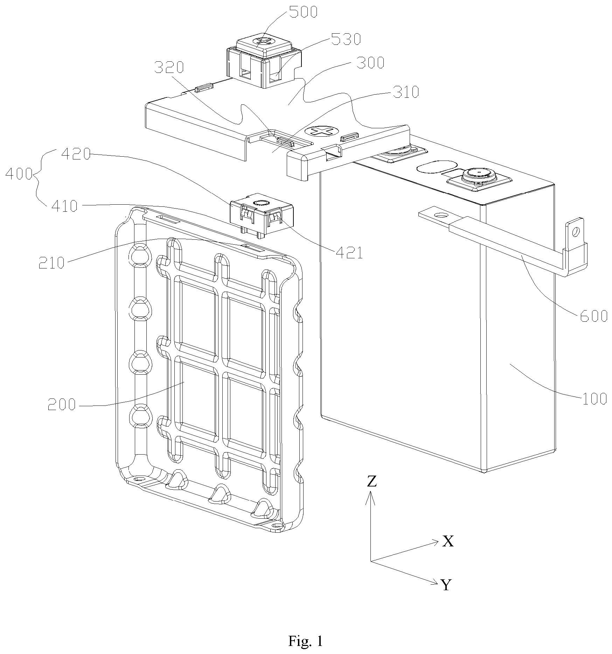

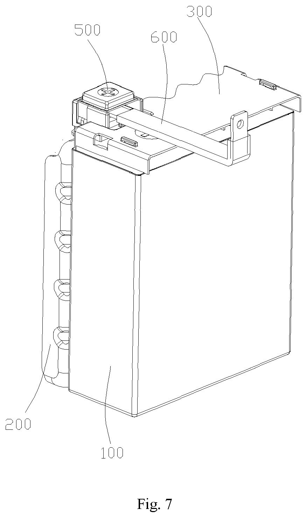

For a better understanding of the present disclosure, a terminal protection cover and a battery module according to an embodiment of the present disclosure will be described in detail below with reference to Fig. 1 to Fig. 7.

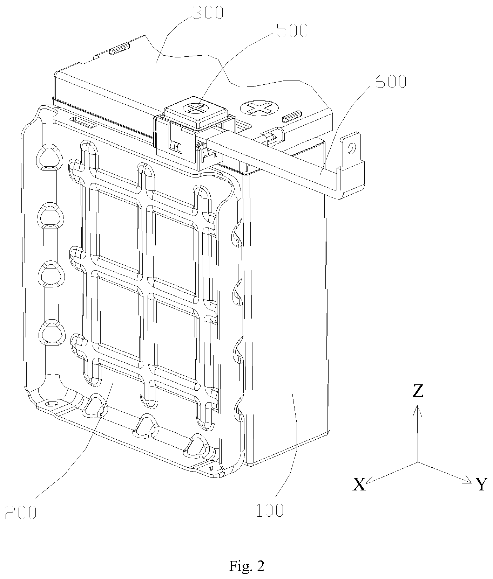

Fig. 1 is a schematic exploded view showing a configuration of a battery module according to an embodiment of the present disclosure, and Fig. 2 is a schematic view showing a configuration of an assembled battery module according to an embodiment of the present disclosure. The battery module includes a plurality of unit cells 100 (Fig. 1 shows only one unit cell 100) arranged side by side in a second direction (X direction as shown in Fig. 1); an end plate 200 disposed on one side of the plurality of unit cells 100 in the X direction and provided with a limiting slot 210 on an upper portion of a body of the end plate 200; an upper cover 300 disposed above the unit cells 100 in a Z direction and provided with a groove 310 corresponding to the limiting slot 210; an output component 400 including a limiting portion 410 and an output terminal 420 continuously connected to each other, with the limiting portion 410 located in the limiting slot 210 and the output terminal 420 located in the groove 310; and a terminal protection cover 500 for covering the output terminal 420 and located in the groove 310. The output terminal 420 is provided with a conductive portion, which can be connected to an external connecting member 600, to realize an electrical connection between different battery modules.

The terminal protection cover 500 may be fixed in various manners. For example, the terminal protection cover 500 is provided with a snap component 530 and the terminal protection cover 500 is fixedly connected to the output terminal 420 and/or the upper cover 300 by the snap component 530 in a snap member.

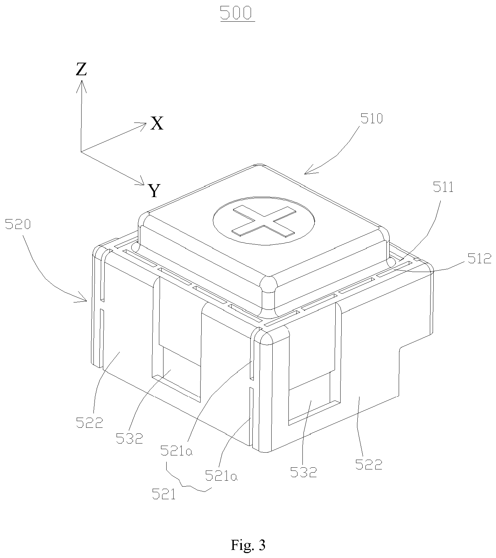

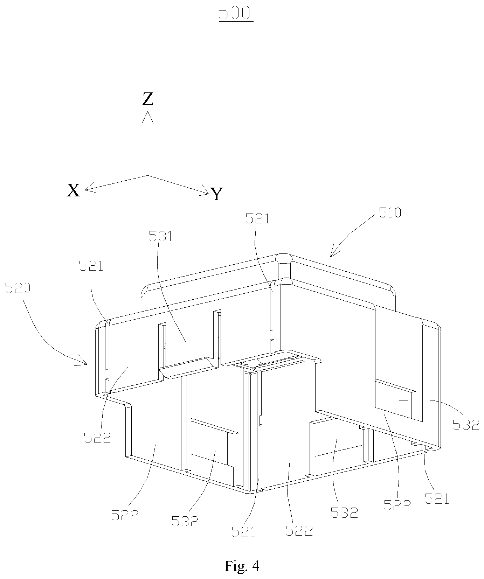

The terminal protection cover 500 may be formed in various manners. As shown in Fig. 3 and Fig. 4, Fig. 3 and Fig. 4 are schematic diagrams showing a configuration of a terminal protection cover 500 of the battery module according to an embodiment of the present disclosure. The terminal protection cover 500 includes: a base portion 510, including a peripheral region 511 and provided with base openings 512 at the peripheral region 511; and a side wall 520, connected to the peripheral region 511 and extending in the Z direction, wherein the side wall 520 is provided with two or more groups of side openings 521 spaced apart from each other and extending in the Z direction, and at least one base opening 512 is located between adjacent two groups of side openings 521 such that a portion of the side wall 520 can be removed by means of the at least one base opening 512 and the adjacent two groups of side openings 521.

A shape of the base portion 510 is not particularly limited herein, as long as the base portion 510 includes a peripheral region 511 and the peripheral region 511 is provided with base openings 512. For example, the base portion 510 may be formed in a shape of plate or in other shapes. Preferably, the base portion 510 is fitted with a top portion of the output terminal 420 in shape. As a result, when the terminal protection cover 500 is mounted and cover the output terminal 420, a free space inside the terminal protection cover 500 can be reduced, thereby increasing an energy density of the battery module.

A manner in which the side wall 520 and the peripheral region 511 are connected is not particularly limited herein, and the side wall 520 may be connected to an edge of the peripheral region 511 or an internal portion of the peripheral region 511. In some optional embodiments, the side wall 520 is connected to the edge of the peripheral region 511. This is conducive to reducing a space occupied by the terminal protection cover 500 while keeping an inside space of the terminal protection cover 500 unchanged, thereby increasing the energy density of the battery module.

In the embodiment of the present disclosure, the terminal protection cover 500 of the battery module includes the base portion 510 and the side wall 520 connected to the peripheral region 511 of the base portion 510, and the base portion 510 and the side wall 520 can cover an outer surface of the output terminal 420 of the battery module. Therefore, during transportation of the battery module, accidents such as short circuit of the modules or electric shock of an operator can be effectively prevented due to the protection of the base portion 510 and the side wall 520. Further, when connecting the battery modules to each other, live terminal inside the terminal protection cover 500 can be exposed by removing a portion of the side wall 520 by means of the base openings 512 and the side openings 521, thereby facilitating connection between the battery modules. Therefore, by the present disclosure, the accidents such as short circuit of the modules or electric shock of an operator during the transportation of the battery modules can be prevented without affecting the connection between the battery modules.

The snap component 530 can be formed in various manners. In some optional embodiments, the groove 310 includes a first inner wall, a second inner wall, a third inner wall and a bottom wall, wherein the first inner wall and the second inner wall are disposed opposite to each other and are connected by the bottom wall, and the bottom wall is provided with a mating snap member 320. The snap component 530 includes a first snap member 531 disposed towards the third inner wall of the groove 310. The first snap member 531 is fitted with the mating snap member 320, such that the end protection cover 500 can be secured to the upper cover 300 via the first snap member 531 and the mating snap member 320 in a snap fit manner.

The specific configurations of the first snap member 531 and the mating snap member 320 are not particularly limited herein, as long as the first snap member 531 and the mating snap member 320 can be secured to each other in the snap fit manner. For example, the first snap member 531 is formed as a hole, and the mating snap member 320 is formed as a hook matching with the hole; or, the first snap member 531 is formed as a hook, and the mating snap member 320 is formed as a hole matching with the hook.

The base opening 512 can be formed in various manners, as along as the base portion 510 can be broken by means of the base opening 512 so as to remove a portion of the side wall 520. For example, the base opening 512 can be formed to extend through part of or the entire base portion 510 in a thickness direction of the base portion 510.

The side openings 521 may be formed in various manners. In some optional embodiments, each group of side openings 521 includes one or more side wall slots 521a recessed into the side wall 520 in a thickness direction of the side wall 520. In the case that each group of side openings 521 includes two or more side wall slots 521a, the two or more side wall slots 521a are spaced apart in the Z direction. Preferably, each group of side openings 521 includes two or more side wall slots 521a spaced apart, to facilitate broken and removal of the side wall 520. The side wall slot 521a may be formed to extend through part of or the entire side wall 520 in the thickness direction of the side wall 520.

The number of the base openings 512 between adjacent two groups of side openings 521 is not particularly limited herein. There may be disposed only one base opening 512, or there may be disposed two or more base openings 512 spaced apart from each other, between adjacent two groups of side openings 521. Preferably, two or more base openings 512 spaced apart from each other are disposed between adjacent two groups of side openings 521. As such, the base opening 512 may have a shorter extending length, and a portion of the base portion 510 connecting the two or more base openings 512 can improve a strength of the base portion 510, thereby preventing the terminal protection cover 500 from being deformed due to crushing during transportation.

It shall be understood that the shape of the base portion 510 is not particularly limited herein, as along as the side wall 520 is connected to the peripheral region 511 of the base portion 510 such that the end protection cover 500 can be mounted and cover the output terminal 410. For example, a projection of the base portion 510 on a first plane may be circular, elliptical, polygonal, or in other irregular shapes. Wherein, the first plane is a plane perpendicular to the Z direction, that is, an X-Y plane.

In some optional embodiments, the projection of the base portion 510 on the first plane is circular, and the side wall 520 is formed into a circular cylinder; or, the projection of the base portion 510 on the first plane is elliptical, and the side wall 520 is formed into an elliptical cylinder.

In the case that the side wall 520 is formed into the circular cylinder or the elliptical cylinder, two or more base openings 512 are provided and respectively located between adjacent two groups of side openings 521. In these optional embodiments, two groups of side openings 521 divide the side wall 520 into two portions and the two or more base openings 512 are respectively located between the adjacent two groups of side openings 521, so that either portion of the side wall 520 can be broken off and removed by means of one of the base openings 512 and the adjacent two groups of side openings 521. Thus, when electrically connecting the battery modules to each other, the portions of the side wall 520 can be selectively removed according to actual requirements and connection orientations.

The arrangement of the two or more groups of side openings 521 is not particularly limited herein. In some optional embodiments, the two or more groups of side openings 521 are evenly distributed in a circumferential direction of the side wall 520, such that the removed portions of the side wall 520 are equal in size.

The number of the groups of side openings 521 is not particularly limited herein. In some optional embodiments, four groups of side openings 521 are provided and evenly distributed in the circumferential direction of the side wall 520. As a result, portions of the side wall 520 at different orientations can be broken off and removed according to actual use requirements, while the remaining portions of the side wall 520 can still ensure that the terminal protection cover 500 is stably mounted on and cover the output terminal 420.

In some other optional embodiments, the projection of the base portion 510 on the first plane is polygonal; and the side wall 520 includes three or more sub-side plates 522, each of which includes two side connecting edges opposite to each other and extending in the first direction (Z direction as shown in Fig. 1), wherein the three or more sub-side plates 522 are connected to each other by the side connecting edges to form a prism, and the side openings 521 are disposed adjacent to the side connecting edges. In these optional embodiments, the projection of the base portion 510 on a horizontal plane is in a shape of a polygon, and the side wall 520 includes three or more sub-side plates 522, each of which is connected to an edge of the peripheral region 511 corresponding to one side of the polygon.

In the case that the projection of the base portion 510 on the horizontal plane is polygonal, three or more groups of side openings 521 are provided and located adjacent to the side connecting edges of the three or more sub-side plates 522, and three or more base openings 512 are provided and respectively located between adjacent two groups of side openings 521. In these optional embodiments, the side openings 521 are disposed adjacent to each side connecting edge of each sub-side plate 522, and the base openings 512 are disposed between any adjacent two groups of side openings 521, such that any of the sub-side plates 522 can be broken off and removed according to actual use requirements.

In some optional embodiments, the snap component 530 includes a second snap member 532, wherein two or more second snap members 532 are provided and spaced apart from each other in the circumferential surface of the side wall. The output terminal 420 is provided two or more matching snap members 421 on an outer surface. The two or more matching snap members 421 are respectively disposed corresponding to the two or more second snap members 532, so that the terminal protection cover 500 can be secured to the output terminal in a snap fit manner via the two or more second snap members 532 and the two or more matching snap members 421. In these optional embodiments, since two or more second snap members 532 are provided, even if one of the second snap members 532 is broken off and removed, the terminal protection cover 500 can still be stably secured to the output terminal 420 in the snap fit manner by the remaining second snap members 532.

The specific configurations of the second snap member 532 and the matching snap member 421 are not particularly limited herein, as long as the second snap member 532 and the matching snap member 421 can be secured to each other in the snap fit manner. For example, the second snap member 532 is formed as a hole, and the matching snap member 421 is formed as a hook matching with the hole; or, the second snap member 532 is formed as a hook and the matching snap member 421 is formed as a hole matching with the hook.

It can be understood that the number of sides of the polygon corresponding to the projection of the base portion 510 on the horizontal plane, is not particularly limited herein. Preferably, the projection of the base portion 510 on the horizontal plane is rectangular, and the side wall 520 includes four sub-side plates 522. At least one side opening 521 is disposed adjacent to each of the two side connecting edges of each sub-side plate 522, and at least one base opening 512 is disposed between any adjacent two groups of side openings 521, so as to facilitate the broken off and removal of any sub-side plate 522 by means of the base opening 512 and the side opening 521. As a result, the user can remove any one of the sub-side plates 522 according to actual use requirements.

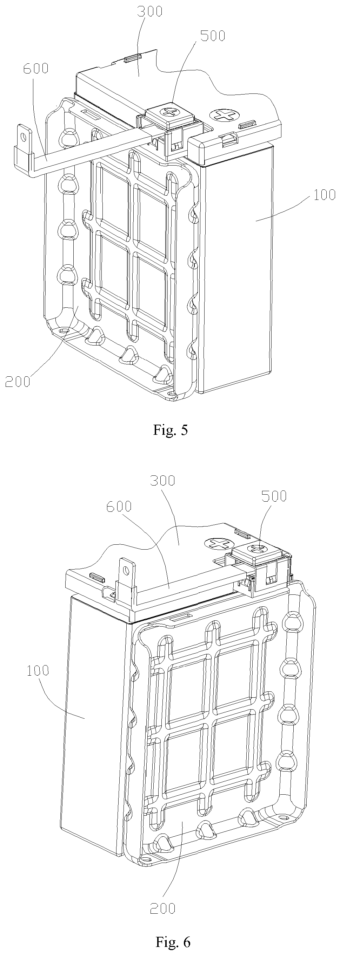

As shown in Fig. 5 to Fig. 7, when the battery modules are connected to each other by the connecting member 600, any of the sub-side plates 522 can be removed according to the use requirements, so that the connecting member 600 can be connected to the battery module in any of four orientations where the four sub-side plates are located.

The present disclosure can be implemented in any other specific manners without departing from the substantial features. The present embodiments are to be considered in all respects as illustrative and not limiting, and the scope of the present disclosure is defined by the appended claims while not the above description. Moreover, all modifications falling within the scope of the claims are included within the scope of the present disclosure.

## Claims

1. A terminal protection cover (500) for a battery module, comprising:
a base portion (510), comprising a peripheral region (511) and provided with base openings (512) at the peripheral region (511); and
a side wall (520), connected to the peripheral region (511) and extending in a first direction (Z), **characterised in that** the side wall (520) is provided with two or more groups of side openings (521) spaced apart from each other and extending in the first direction (Z), and at least one base opening (512) is located between adjacent two groups of side openings (521) such that a portion of the side wall (520) can be removed by means of the at least one base opening (512) and the adjacent two groups of side openings (521).

2. The terminal protection cover (500) according to claim 1, **characterized in that**,
the base opening (512) is formed to extend through part of or the entire base portion (510) in a thickness direction of the base portion (510).

3. The terminal protection cover (500) according to claim 1 or claim 2, **characterized in that**,
between adjacent two groups of side openings (521), there is disposed one base opening (512), or there are disposed two or more base openings (512) spaced apart from each other.

4. The terminal protection cover (500) according to any of claims 1 to 3, **characterized in that**,
each group of side openings (521) comprises one or more side wall slots recessed into the side wall in a thickness direction of the side wall (520), and in the case that each group of the side openings (521) comprises two or more side wall slots, the two or more side wall slots are spaced apart in the first direction (Z).

5. The terminal protection cover (500) according to claim 4, **characterized in that**, the side wall slot is formed to extend through part of or the entire side wall (520) in the thickness direction of the side wall (520).

6. The terminal protection cover (500) according to any of claims 1 to 5, **characterized in that**, the side wall (520) is formed into a circular cylinder or an elliptical cylinder.

7. The terminal protection cover (500) according to any of claims 1 to 6, **characterized in that**,
the terminal protection cover (500) comprises two or more base openings (512), and the two or more base openings (512) are respectively located between adjacent two groups of side openings (521).

8. The terminal protection cover (500) according to any of claims 1 to 5, **characterized in that**,
the side wall (520) comprises three or more sub-side plates (522), each of which comprises two side connecting edges opposite to each other and extending in the first direction (Z), wherein the three or more sub-side plates (522) are connected to each other through the side connecting edges to form a prism, and the side openings (521) are disposed adjacent to the side connecting edges.

9. The terminal protection cover (500) according to claim 8, **characterized in that**,
the terminal protection cover (500) comprises three or more groups of side openings (521), and the three or more groups of side openings (521) are respectively disposed adjacent to the side connecting edges of the three or more sub-side plates (522); and
the terminal protection cover (500) comprises three or more base openings (512), and the three or more base openings (512) are respectively located between adjacent two groups of side openings (521).

10. A battery module, comprising:
a plurality of unit cells (100) stacked in a second direction (X);
an end plate (200), disposed on one side of the plurality of unit cells (100) in the second direction (X) and provided with a limiting slot (210) at an end in the first direction (Z);
an upper cover (300), disposed on one side of the plurality of unit cells (100) in the first direction (Z), wherein the upper cover (300) is provided with a groove (310) disposed corresponding to the limiting slot (210);
an output component (400), comprising a limiting portion (410) and an output terminal (420) continuously connected to each other, wherein the limiting portion (410) is located in the limiting slot (210) and the output terminal (420) is located in the groove (310); and
a terminal protection cover (500) according to any of claims 1-9, covering the output terminal (420) and located in the groove (310).

11. The battery module according to claim 10, **characterized in that**,
the side wall (520) of the terminal protection cover (500) is provided with a snap component (530) such that the terminal protection cover (500) can be secured to the output terminal (420) and/or the upper cover (300) by the snap component (530) in a snap fit manner.

12. The battery module according to claim 11, **characterized in that**,
the groove (310) comprises a first inner wall, a second inner wall, a third inner wall and a bottom wall, wherein the first inner wall and the second inner wall are disposed opposite to each other and are connected by the bottom wall, and the bottom wall is provided with a mating snap member (320); and
the snap component (530) comprises a first snap member (531) disposed toward the third inner wall, and the first snap member (531) is fitted with the mating snap member (320) such that the terminal protection cover (500) can be secured to the upper cover (300) via the first snap member (531) and the mating snap member (320) in the snap fit manner.

13. The battery module according to claim 11 or claim 12, **characterized in that**,
the snap component (530) comprises two or more second snap members (532) spaced apart in a circumferential surface of the side wall (520); and
the output component (400) is provided with two or more matching snap members (421) on an outer surface, and the two or more matching snap members (421) are respectively disposed corresponding to the two or more second snap members (532) such that the terminal protection cover (500) is secured to the output terminal (420) via the two or more second snap members (532) and the two or more matching snap members (421) in the snap fit manner.

## Patentansprüche

1. Eine Anschlussschutzabdeckung (500) für ein Batteriemodul, umfassend:
einen Basisabschnitt (510), der einen Umfangsbereich (511) umfasst und mit Basisöffnungen (512) am Umfangsbereich (511) versehen ist; und
eine Seitenwand (520), die mit dem Umfangsbereich (511) verbunden ist und sich in einer ersten Richtung (Z) erstreckt,
**dadurch gekennzeichnet, dass**
die Seitenwand (520) mit zwei oder mehr Gruppen von Seitenöffnungen (521) versehen ist, die voneinander beabstandet sind und sich in der ersten Richtung (Z) erstrecken, wobei mindestens eine Basisöffnung (512) sich zwischen benachbarten zwei Gruppen von Seitenöffnungen (521) befindet, so dass ein Abschnitt der Seitenwand (520) mittels der mindestens einen Basisöffnung (512) und der benachbarten zwei Gruppen von Seitenöffnungen (521) entfernt werden kann.

2. Die Anschlussschutzabdeckung (500) nach Anspruch 1, **dadurch gekennzeichnet, dass** die Basisöffnung (512) so ausgebildet ist, dass sie sich durch einen Teil des Basisabschnitts oder den gesamten Basisabschnitt (510) in einer Dickenrichtung des Basisabschnitts (510) erstreckt.

3. Die Anschlussschutzabdeckung (500) nach Anspruch 1 oder Anspruch 2, **dadurch gekennzeichnet, dass** zwischen benachbarten zwei Gruppen von Seitenöffnungen (521) eine Basisöffnung (512) angeordnet ist oder zwei oder mehr Basisöffnungen (512), die voneinander beabstandet sind, angeordnet sind.

4. Die Anschlussschutzabdeckung (500) nach einem der Ansprüche 1 bis 3, **dadurch gekennzeichnet, dass** jede Gruppe von Seitenöffnungen (521) einen oder mehrere Seitenwandschlitze umfasst, die in einer Dickenrichtung der Seitenwand (520) in die Seitenwand vertieft sind, und in dem Fall, dass jede Gruppe der Seitenöffnungen (521) zwei oder mehr Seitenwandschlitze umfasst, die zwei oder mehr Seitenwandschlitze in der ersten Richtung (Z) voneinander beabstandet sind.

5. Die Anschlussschutzabdeckung (500) nach Anspruch 4, **dadurch gekennzeichnet, dass** der Seitenwandschlitz so ausgebildet ist, dass er sich durch einen Teil der Seitenwand oder die gesamte Seitenwand (520) in der Dickenrichtung der Seitenwand (520) erstreckt.

6. Die Anschlussschutzabdeckung (500) nach einem der Ansprüche 1 bis 5, **dadurch gekennzeichnet, dass** die Seitenwand (520) zu einem Kreiszylinder oder einem elliptischen Zylinder ausgebildet ist.

7. Die Anschlussschutzabdeckung (500) nach einem der Ansprüche 1 bis 6, **dadurch gekennzeichnet, dass** die Anschlussschutzabdeckung (500) zwei oder mehr Basisöffnungen (512) umfasst, wobei die zwei oder mehr Basisöffnungen (512) sich jeweils zwischen benachbarten zwei Gruppen von Seitenöffnungen (521) befinden.

8. Die Anschlussschutzabdeckung (500) nach einem der Ansprüche 1 bis 5, **dadurch gekennzeichnet, dass** die Seitenwand (520) drei oder mehr Teilseitenplatten (522) umfasst, jede von denen zwei einander gegenüberliegende und sich in der ersten Richtung (Z) erstreckende Seitenverbindungskanten umfasst, wobei die drei oder mehr Teilseitenplatten (522) durch die Seitenverbindungskanten miteinander verbunden sind, um ein Prisma zu bilden, und die Seitenöffnungen (521) neben den Seitenverbindungskanten angeordnet sind.

9. Die Anschlussschutzabdeckung (500) nach Anspruch 8, **dadurch gekennzeichnet, dass**
die Anschlussschutzabdeckung (500) drei oder mehr Gruppen von Seitenöffnungen (521) umfasst, wobei die drei oder mehr Gruppen von Seitenöffnungen (521) jeweils neben den Seitenverbindungskanten der drei oder mehr Teilseitenplatten (522) angeordnet sind; und
die Anschlussschutzabdeckung (500) drei oder mehr Basisöffnungen (512) umfasst, wobei die drei oder mehr Basisöffnungen (512) sich jeweils zwischen benachbarten zwei Gruppen von Seitenöffnungen (521) befinden.

10. Ein Batteriemodul, umfassend:
mehrere Einheitszellen (100), die in einer zweiten Richtung (X) gestapelt sind;
eine Endplatte (200), die in der zweiten Richtung (X) auf einer Seite der mehreren Einheitszellen (100) angeordnet und an einem Ende in der ersten Richtung (Z) mit einem Begrenzungsschlitz (210) versehen ist;
eine obere Abdeckung (300), die in der ersten Richtung (Z) auf einer Seite der mehreren Einheitszellen (100) angeordnet ist, wobei die obere Abdeckung (300) mit einer Nut (310) versehen ist, die entsprechend dem Begrenzungsschlitz (210) angeordnet ist;
eine Ausgangskomponente (400), umfassend einen Begrenzungsabschnitt (410) und einen Ausgangsanschluss (420), die kontinuierlich miteinander verbunden sind, wobei sich der Begrenzungsabschnitt (410) in dem Begrenzungsschlitz (210) befindet und der Ausgangsanschluss (420) sich in der Nut (310) befindet; und
eine Anschlussschutzabdeckung (500) nach einem der Ansprüche 1 bis 9, die den Ausgangsanschluss (420) abdeckt und sich in der Nut (310) befindet.

11. Das Batteriemodul nach Anspruch 10, **dadurch gekennzeichnet, dass** die Seitenwand (520) der Anschlussschutzabdeckung (500) mit einer Schnappkomponente (530) versehen ist, so dass die Anschlussschutzabdeckung (500) an dem Ausgangsanschluss (420) und/oder der oberen Abdeckung (300) durch die Schnappkomponente (530) in einer Schnapppassung befestigt werden kann.

12. Das Batteriemodul nach Anspruch 11, **dadurch gekennzeichnet, dass**
die Nut (310) eine erste Innenwand, eine zweite Innenwand, eine dritte Innenwand und eine Bodenwand umfasst, wobei die erste Innenwand und die zweite Innenwand einander gegenüberliegend angeordnet und durch die Bodenwand verbunden sind, wobei die Bodenwand mit einem Gegenschnappelement (320) versehen ist; und
die Schnappkomponente (530) ein erstes Schnappelement (531) umfasst, das zur dritten Innenwand hin angeordnet ist, wobei das erste Schnappelement (531) so an den Gegenschnappelement (320) angepasst ist, dass die Anschlussschutzabdeckung (500) an der oberen Abdeckung (300) über das erste Schnappelement (531) und das Gegenschnappelement (320) in der Schnapppassung befestigt werden kann.

13. Das Batteriemodul nach Anspruch 11 oder Anspruch 12, **dadurch gekennzeichnet, dass**
die Schnappkomponente (530) zwei oder mehr zweite Schnappelemente (532) umfasst, die in einer Umfangsfläche der Seitenwand (520) voneinander beabstandet sind; und
die Ausgangskomponente (400) mit zwei oder mehr Gegenschnappelementen (421) auf einer Außenfläche versehen ist, wobei die zwei oder mehr Gegenschnappelemente (421) entsprechend den zwei oder mehr zweiten Schnappelementen (532) angeordnet sind, so dass die Anschlussschutzabdeckung (500) an dem Ausgangsanschluss (420) über die zwei oder mehr zweiten Schnappelemente (532) und die zwei oder mehr Gegenschnappelement (421) in der Schnapppassung befestigt ist.

## Revendications

1. Couvercle de protection de borne (500) pour un module de batterie, comprenant :
une partie de base (510), comprenant une région périphérique (511) et pourvue d'ouvertures de base (512) au niveau de la région périphérique (511) ; et
une paroi latérale (520), reliée à la région périphérique (511) et s'étendant dans une première direction (Z),
**caractérisé en ce que**
la paroi latérale (520) est pourvue d'au moins deux groupes d'ouvertures latérales (521) espacées les unes des autres et s'étendant dans la première direction (Z) et au moins une ouverture de base (512) est située entre deux groupes adjacents d'ouvertures latérales (521) de telle sorte qu'une partie de la paroi latérale (520) puisse être retirée au moyen de la au moins une ouverture de base (512) et des deux groupes adjacents d'ouvertures latérales (521).

2. Couvercle de protection de borne (500) selon la revendication 1, **caractérisé en ce que** l'ouverture de base (512) est formée pour s'étendre à travers une partie, ou la totalité, de la partie de base (510) dans une direction d'épaisseur de la partie de base (510).

3. Couvercle de protection de borne (500) selon la revendication 1 ou la revendication 2, **caractérisé en ce que** entre deux groupes adjacents d'ouvertures latérales (521), est disposée une ouverture de base (512) ou sont disposées au moins deux ouvertures de base (512) espacées l'une de l'autre ou les unes des autres.

4. Couvercle de protection de borne (500) selon l'une quelconque des revendications 1 à 3, **caractérisé en ce que** chaque groupe d'ouvertures latérales (521) comprend une ou plusieurs fentes de paroi latérale renfoncées dans la paroi latérale dans une direction d'épaisseur de la paroi latérale (520) et, dans le cas où chaque groupe des ouvertures latérales (521) comprend au moins deux fentes de paroi latérale, les deux, ou plus, fentes de paroi latérale sont espacées dans la première direction (Z).

5. Couvercle de protection de borne (500) selon la revendication 4, **caractérisé en ce que** la fente de paroi latérale est formée pour s'étendre à travers une partie, ou la totalité, de la paroi latérale (520) dans la direction d'épaisseur de la paroi latérale (520).

6. Couvercle de protection de borne (500) selon l'une quelconque des revendications 1 à 5, **caractérisé en ce que** la paroi latérale (520) est formée dans un cylindre circulaire ou un cylindre elliptique.

7. Couvercle de protection de borne (500) selon l'une quelconque des revendications 1 à 6, **caractérisé en ce que** le couvercle de protection de borne (500) comprend au moins deux ouvertures de base (512) et les deux, ou plus, ouvertures de base (512) sont respectivement situées entre deux groupes adjacents d'ouvertures latérales (521).

8. Couvercle de protection de borne (500) selon l'une quelconque des revendications 1 à 5, **caractérisé en ce que** la paroi latérale (520) comprend au moins trois plaques sous-latérales (522) qui comprennent chacune deux bords de raccordement latéraux opposés l'un à l'autre et s'étendant dans la première direction (Z), dans lequel les trois, ou plus, plaques sous-latérales (522) sont reliées les unes aux autres au moyen des bords de raccordement latéraux pour former un prisme et les ouvertures latérales (512) sont disposées de manière adjacente aux bords de raccordement latéraux.

9. Couvercle de protection de borne (500) selon la revendication 8, **caractérisé en ce que**
le couvercle de protection de borne (500) comprend au moins trois groupes d'ouvertures latérales (521) et les trois, ou plus, groupes d'ouvertures latérales (521) sont respectivement disposés de manière adjacente aux bords de raccordement latéraux des trois, ou plus, plaques sous-latérales (522) ; et
le couvercle de protection de borne (500) comprend au moins trois ouvertures de base (512) et les trois, ou plus, ouvertures de base (512) sont respectivement situées entre deux groupes adjacents d'ouvertures latérales (521).

10. Module de batterie comprenant :
une pluralité de cellules unitaires (100) empilées dans une seconde direction (X) ;
une plaque d'extrémité (200), disposée sur un côté de la pluralité de cellules unitaires (100) dans la seconde direction (X) et pourvue d'une fente de limitation (210) au niveau d'une extrémité dans la première direction (Z) ;
un couvercle supérieur (300), disposé sur un côté de la pluralité de cellules unitaires (100) dans la première direction (Z), dans lequel le couvercle supérieur (300) est pourvu d'une rainure (310) disposé de manière correspondante à la fente de limitation (210) ;
un composant de sortie (400), comprenant une partie de limitation (410) et une borne de sortie (420) reliées de manière continue l'une à l'autre, dans lequel la partie de limitation (410) est située dans la fente de limitation (210) et la borne de sortie (420) est située dans la rainure (310) ; et
un couvercle de protection de borne (500) selon l'une quelconque des revendications 1 à 9, recouvrant la borne de sortie (420) et situé dans la rainure (310).

11. Module de batterie selon la revendication 10, **caractérisé en ce que** la paroi latérale (520) du couvercle de protection de borne (500) est pourvue d'un composant d'encliquetage (530) de telle sorte que le couvercle de protection de borne (500) puisse être fixé à la borne de sortie (420) et/ou au couvercle supérieur (300) au moyen du composant d'encliquetage (530) par encliquetage.

12. Module de batterie selon la revendication 11, **caractérisé en ce que**
la rainure (310) comprend une première paroi interne, une deuxième paroi interne et une troisième paroi interne et une paroi inférieure, dans lequel la première paroi interne et la deuxième paroi interne sont disposées à l'opposé l'une de l'autre et sont reliées par la paroi inférieure et la paroi inférieure est pourvue d'un élément d'encliquetage homologue (320) ; et
le composant d'encliquetage (530) comprend un premier élément d'encliquetage (531) disposé vers la troisième paroi interne et l'élément d'encliquetage (531) est équipé de l'élément d'encliquetage homologue (320) de telle sorte que le couvercle de protection de borne (500) puisse être fixé au couvercle supérieur (300) par le biais du premier élément d'encliquetage (531) et de l'élément d'encliquetage homologue (320) par encliquetage.

13. Module de batterie selon la revendication 11 ou la revendication 12, **caractérisé en ce que**
le composant d'encliquetage (530) comprend au moins deux seconds éléments d'encliquetage (532) espacés dans une surface circonférentielle de la paroi latérale (520) ; et
le composant de sortie (400) est pourvu d'au moins deux éléments d'encliquetage correspondants (421) sur une surface externe et les deux, ou plus, éléments d'encliquetage correspondants (421) sont respectivement disposés de manière correspondante aux deux, ou plus, seconds éléments d'encliquetage (532) de telle sorte que le couvercle de protection de borne (500) soit fixé à la borne de sortie (420) par le biais des deux, ou plus, seconds éléments d'encliquetage (532) et des deux, ou plus, éléments d'encliquetage correspondants (421) par encliquetage.
